# EUROPEAN PATENT SPECIFICATION

(11) **EP 3 241 748 B1**
(45) Date of publication and mention of the grant of the patent: **19.12.2018**
(21) Application number: 16168582.1
(22) Date of filing: 06.05.2016
(51) Int. Cl.: H04L 29/08, B64D 11/00, B64D 11/06, H04W 4/00, H04W 4/48, H04W 4/80

(54) **SEAT MODULE WITH WIRELESS COMMUNICATION MODULE, VEHICLE SEAT WITH SEAT MODULE, AIRCRAFT AND METHOD FOR OPERATING A SEAT MODULE**
SITZMODUL MIT EINEM DRAHTLOSKOMMUNIKATIONSMODUL, FAHRZEUGSITZ MIT SITZMODUL, FLUGZEUG UND VERFAHREN ZUM BETÄTIGEN EINES SITZMODULS
MODULE DE SIÈGE AVEC MODULE DE COMMUNICATION SANS FIL, SIÈGE DE VÉHICULE AVEC MODULE DE SIÈGE, AÉRONEF ET PROCÉDÉ DE FONCTIONNEMENT D'UN MODULE DE SIÈGE

(43) Date of publication of application: 08.11.2017
(73) Proprietor: Airbus Operations GmbH, 21129 Hamburg (DE)
(72) Inventor: Müller, Jan, 21129 Hamburg (DE); Chen, Bing, 21129 Hamburg (DE); Tillack-Nieveler, Christoph, 21129 Hamburg (DE)
(74) Representative: Isarpatent

(56) References cited:
- US-A1- 2003 107 248
- US-A1- 2004 077 308
- US-A1- 2006 103 193
- US-A1- 2007 217 622
- US-A1- 2012 191 297
- US-A1- 2016 080 042
- US-B1- 6 929 218

## Description

### FIELD OF THE INVENTION

The present invention pertains to a seat module with wireless communication module, a vehicle seat with a seat module having a wireless communication module, aircraft infrastructure including multiple vehicle seats with seat modules having a wireless communication modules, an aircraft having aircraft infrastructure including multiple vehicle seats with seat modules having a wireless communication modules, and a method for operating a seat module, in particular for use in seats in aircraft.

Although applicable for any kind of vehicle seat, the present invention and the corresponding underlying problems will be explained in further detail in conjunction with an aircraft.

### BACKGROUND OF THE INVENTION

Passengers of vehicles are provided with multiple opportunities to individually and dynamically configure the vehicle seat environment. Particularly in aircraft, passengers are for example able to selectively activate an individual reading light for their respective seat or to set off a call for assistance by a flight attendant (a so-called PAX call). To this end, control or activation elements are integrated into the vehicle near or at the seat. Due to the high modularity and variability of contemporary seating components in vehicles, an integration of new design approaches into existing vehicle structures becomes more complex as well.

Usually, seat installations in vehicles are linked via wires connecting their respective data, control signal and power interfaces with the central vehicle controllers. The installation may aggregate power and data on a single line (so-called "power over data" or "data over power" connections) or may use separate wired lines for controlling individual seat functions.

The document US 6,929,218 B1 discloses seating elements including a plurality of seat options integrated into the seating element and an electronics control system integrated into the seating element, the electronics control system including a seat processor having logic adapted to monitor an operational status of each of the seat options and communicate the operational status to the central monitoring system via wireless communication.

The document US 2004/0077308 A1 discloses a video display unit mounted on a seat back, including a processor, a video display electrically coupled to the processor, a component configured for wireless communication with the processor, and a receiver electrically coupled to the processor.

The document US 2003/0107248 A1 discloses an aircraft seat assembly including at least one electronic component usable by a passenger and an single integrated electronic systems which provides signal decoding, signal routing, data management, built-in test, and power conversion for each user accessible electronic component which is installed in the seat assembly.

The document US 2007/0217622 A1 discloses a wireless client device having a seat unit with a seat portion on which aircraft passengers sit, an antenna for sending and receiving the data signals, a signal processing arrangement operable to handle data signal receiving and transmitting processes, and a signal output arrangement operable to output processed reception signals.

US 2016/0080042 A1 discloses redundant wireless data transmission between an aircraft seat and a control unit.

### SUMMARY OF THE INVENTION

It is one of the objects of the invention to increase the flexibility in designing and integrating passenger control elements for vehicle seats. It would be particularly desirable to find solutions for modular vehicle seats without or at least with a reduced number of hardwired connections to a control network of the vehicle.

According to a first aspect of the invention, a seat module for use in a vehicle seat, according to claim 1 includes among other features a wireless communication module configured to wirelessly communicate data and control signals to and from a wireless access module, and a plurality of seat function components coupled to the wireless communication module and configured to exchange data and control signals with the wireless communication module.

According to a second aspect of the invention, a vehicle seat comprises a seat module according to the first aspect of the invention integrated into the vehicle seat.

According to a third aspect of the invention, an aircraft comprises at least one vehicle seat according to the second aspect of the invention.

According to a fourth aspect of the invention, a method for operating a seat module of a vehicle seat in accordance with claim 13 comprises among others the steps of wirelessly transmitting at least one control signal to a wireless communication module of the seat module of the vehicle seat, actuating one of a plurality of seat function components coupled to the wireless communication module of the seat module on the basis of the at least one wirelessly transmitted control signal, and wirelessly transmitting at least one data or control signal to a wireless access module from the wireless communication module of the seat module, the at least one data or control signal comprising information pertaining to at least one of the plurality of seat function components.

One idea of the present invention is to link a number of seat-related functions and data through a wireless seat controller to the aircraft infrastructure. The wireless connectivity of the seat-related functions to a wireless aircraft network advantageously reduces the efforts otherwise needed for hardwiring the seats to the central aircraft control systems.

A great advantage of wireless communication is the flexibility in arrangement of the seat control functions with respect to the location of the remote system components controlled with the seat control functions. For example, seat function components in aircraft enhanced with the functionality of being able to set off PAX calls or to activate the seat reading light may be placed mainly for convenient usage by the passenger rather than depending on the arrangement of wiring and cables in the seat.

A further advantage may be seen in the separation of components that are rapidly evolving in terms of communication protocols from those components the communication of which is scarcely changing. When upgrading components and control functions of a seat, the centralization of the communication through a seat integrated wireless communication module facilitates integrating the upgraded components and control functions into the existing aircraft infrastructure. Additionally, upgrades and modifications on the aircraft side of the network may be obviated, thereby enabling a scalable, flexible and highly configurable connectivity solution for seat function components.

By providing a redundant wireless communication channel in parallel to a hardwired communication channel for at least some of the seat control functions, the level of failure conditions to which the corresponding communication between the seat control functions and a central aircraft controller might contribute may be set lower for each individual communication channel. Both communication channels operating completely redundantly to and independent from each other may in combination result in meeting a higher level of design assurance than with each of the communication channels alone. This may allow for a higher flexibility in designing the software and hardware of the redundantly connected seat control functions without giving up a higher level of design assurance.

According to an embodiment of the seat module, the plurality of seat function components may comprise one or more of seat controls, a reading light button, a window shade switch, a PAX call button, a fasten seatbelt sign, a no smoking sign, a seat BITE monitoring component, a seat ambient light and a video display.

According to a further embodiment of the seat module, the wireless communication module may operate according to the wireless avionics intra-communications (WAIC) standard in a frequency band between 4.2 GHz and 4.4 GHz. Such WAIC compliant communication module advantageously decouple data transmission from and to aircraft components integrated into and/or controllable from seats from other wireless communication channels that might be utilized in the passenger cabin of the aircraft, such as communication for transmitting video and/or audio signal streams for in-flight entertainment applications or communication between personal electronic devices of the passengers.

According to claim 1, the seat module further comprises an entertainment system, and a seat data communication interface coupled to the entertainment system and configured to stream received video and/or audio content transmitted to the entertainment system. The seat data communication interface may in particular be an Ethernet interface coupled to an Ethernet communication line of an aircraft. However, in some other embodiments, the entertainment system may be wirelessly connected to the central in-flight entertainment system of the aircraft, for example via WiFi or WLAN.

According claim 1 the at least a first seat function component of the plurality of seat function components is coupled to the entertainment system and configured to redundantly send and receive data and control signals over both the wireless communication module and the entertainment system. By providing redundant communication channels for at least some seat function components, the design assurance level for those components may be advantageously raised.

In some embodiments, the at least first seat function component may be configured to send and receive data via the seat data communication interface, if the wireless communication module is in a faulty operational state. In some embodiments, the at least first seat function component may be configured to send and receive data via the wireless communication module, if the entertainment system is in a faulty operational state.

According to a further embodiment of the seat module, the seat module may further comprise a power distributor, and a seat power supply interface coupled to the power distributor. The power distributor may be coupled to a central power supply of an aircraft and receive power therefrom. In some embodiments, the seat power supply interface and the seat communication interface may be integrated into a single data-over-power or power-over-data, in particular Power-over-Ethernet (PoE) interface and the power distributor and the entertainment system may receive power and data signals over a combined power and data communication line of an aircraft.

According to a further embodiment of the seat module, the wireless communication module may be electrically connected to the power distributor. The electrical energy needed for operation of the wireless communication module may in this case advantageously be retrieved from the power supply supplying the seat function components.

Such vehicle seats may in particular embodiments be employed as passenger aircraft seats in an aircraft.

According to an embodiment of the aircraft, the aircraft may further comprise at least one wireless access module installed in an aircraft passenger cabin of the aircraft and configured to wirelessly communicate with the wireless communication modules of the seat modules of the vehicle seats. In some embodiments, the aircraft may further comprise an aircraft server coupled to or comprising the at least one wireless access module and configured to process the data and control signal received from or to be transmitted to the wireless communication modules of the seat modules of the vehicle seats.

In some embodiments of the aircraft, the at least one wireless access module may be a module operating according to the wireless avionics intra-communications (WAIC) standard in a frequency band between 4.2 GHz and 4.4 GHz.

### BRIEF DESCIRPTION OF THE DRAWINGS

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates aircraft infrastructure according to an embodiment of the invention.
Fig. 2 schematically illustrates details of a seat module according to another embodiment of the invention.
Fig. 3 schematically illustrates a cabin environment of an aircraft with aircraft seats having integrated seat modules according to a further embodiment of the invention.
Fig. 4 schematically illustrates an aircraft comprising a cabin environment according to a further embodiment of the invention.
Fig. 5 schematically illustrates a flow diagram of a method for operating an integrated aircraft seat module according to yet another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

### DETAILED DESCRIPTION OF THE INVENTION

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Vehicle seats within the meaning of the present invention may comprise any form of structural components of a vehicle which are intended to host a passenger for the duration of travel with the vehicle. In particular, vehicle seats in aircraft may be used personally and at least temporarily exclusively by the passenger of the aircraft during the flight. Seats within the meaning of the invention may be aircraft seats, but also loungers, armchairs, beds, suites of the first or royal class or similar seating furniture within an aircraft.

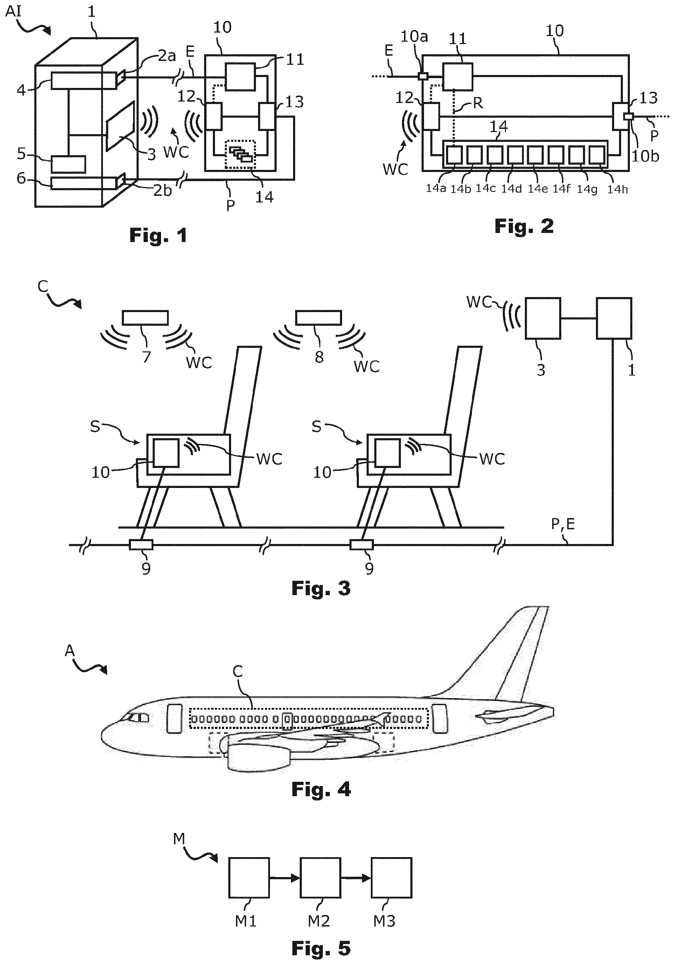

Fig. 1 illustrates aircraft infrastructure AI with an aircraft server 1 and an exemplary seat module 10 for a vehicle seat, such as an aircraft seat for a passenger. The aircraft network side generally comprises one or more aircraft servers 1 which may include a wired data communication interface 2a coupled to a data server 4 and a power supply interface 2b coupled to a power supply 6. The aircraft server 1 may further comprise an aircraft systems controller 5, such as for example a cabin intercommunication data system.

The power supply 6 for the seat modules 10 may for example be a low voltage power network in a vehicle, for example an aircraft 28VDC network. It may also be possible to provide AC power from the power supply 6, such as 115VAC from an aircraft on-board electrical system.

The wired data communication interface 2a may for example be an Ethernet interface which connects to an Ethernet communication line E. The data server 4 may for example be an in-flight entertainment (IFE) server hosting applications for delivering video and/or audio content as streamed content to individual entertainment systems of passenger seats.

The aircraft server 1 further comprises a wireless access module 3 for wireless communication WC with one or more of the seat modules 10. The wireless access module 3 may in particular operate in accordance with the wireless avionics intra-communications (WAIC) standard in one or more frequency bands between 4.2 GHz and 4.4 GHz. Additionally or alternatively, the wireless access module 3 may also operate according to IEEE 802.11 standards, i.e. in 900 MHz, 2.4 GHz, 3.6 GHz, 5 GHz, and/or 60 GHz frequency bands.

The aircraft server 1 may be connected by a data communication line, such as an Ethernet communication line E, on one hand and a power supply line P on the other hand to a seat module 10. The seat module 10 may comprise an entertainment system 11 in wired data communication with the data server 4 of the aircraft server 1. The seat module 10 may further comprise a wireless communication module 12 configured to wirelessly communicate data and control signals to and from the wireless access module 3. The data and control signals may be used for actuating, monitoring and generally communicating with a plurality of seat function components 14 coupled to the wireless communication module 12 in the seat module 10. The plurality of seat function components 14 is configured to exchange data and control signals with the wireless communication module 12 within the seat module 10.

Fig. 2 schematically illustrates a seat module 10 for integration into a vehicle seat, such as for example an aircraft seat S for a passenger of an aircraft. The aircraft seats S may be installed in a passenger cabin of an aircraft, such as an aircraft A as exemplarily depicted in Fig. 4. The function of the seat module 10 is explained in conjunction with the illustration of an exemplary aircraft passenger cabin C, as exemplarily depicted in Fig. 5. The seat module 10 of Fig. 2 may particularly be integrated into the aircraft infrastructure AI as described and explained in conjunction with Fig. 1.

The seat module 10 may comprise an entertainment system 11, for example an in-flight entertainment (IFE) system 11 coupled to a media server of the aircraft via a seat data communication interface 10b. For example, the entertainment system 11 may be configured to stream received video and/or audio content transmitted to the entertainment system, for example via an Ethernet communication line E of an aircraft.

The seat module 10 may comprise a plurality of seat function components 14, internal seat controls 14a, a reading light button 14b, a window shade switch 14c, a PAX call button 14d, a fasten seatbelt sign 14e, a no smoking sign 14f, a seat BITE monitoring component 14g and/or a video display 14h. Additionally, some other seat function components may also include further functions such as for example seat ambient lights.

As exemplarily shown in Fig. 2, a first one of the seat function components 14 - in the example of Fig. 2 the seat function component 14a - is redundantly coupled via redundant connection R to the entertainment system 11. The seat function component 14a may in this manner redundantly send and receive data and control signals over both the wireless communication module 12 and the entertainment system 11. For example, if the wireless communication module 12 is in a faulty operational state, the seat function component 14a may be configured to send and receive data via the seat data communication interface 10b. On the other hand, if the entertainment system 10 is in a faulty operational state, the seat function component 14a may be configured to send and receive data via the wireless communication module 12. This is particularly advantageous for seat function components 14a that are to be controlled locally by a passenger in a normal flight situation and remotely by the cabin crew and/or the cockpit crew in an exceptional flight situation. For example, the seat function component 14a may be an actuating component for the backrest of the vehicle seat. Under normal flight conditions the passenger is able to recline the backrest to any desired reclining angle. However, under exceptional flight conditions the cockpit crew and/or the cabin crew need to be able to override any control commands of the passenger to bring the backrest into an upright position. To that end, the seat function component 14a should be controllable via control signals remotely sent to the seat module 10 by the aircraft server 1. To ensure a certain level of reliability in being able to relay such remote control signals to the seat module 10, providing two separate communication channels -via wireless communication WC and via wire-bound communication over the Ethernet communication line E - a higher design assurance level for the seat function component 14a may be achieved.

The seat module 10 may further a power distributor 13 that is coupled to an external power supply via a seat power supply interface 10b coupled to the power distributor 13. The wireless communication module 12, the entertainment system 11 and/or some or all of the plurality of seat function components 14 may be electrically connected to the power distributor 13, with the power distributor 13 managing the power supply to the various components of the seat module 10 as needed.

In the embodiment of Fig. 2, the wireless communication module 12 is electrically connected to the power supply interface 10b via a power distributor 13, for example by wiring internal to the seat module 10. Therefore, the wireless communication module 12 will obtain the electrical energy needed for its operation from the power distributor 13. The power distributor 13 may also be connected to the entertainment system 11 and/or the seat function components 14 and may distribute electrical power needed for their respective operation. Each of the power distributors 13 may be connected to an aircraft power supply via the power supply line P.

Fig. 3 schematically shows an illustration of a part of a cabin environment of a passenger cabin C in an aircraft in which a number of vehicle seats S with integrated seat modules 10 is arranged. The cabin environment C may particularly be suitable for arrangement within a passenger aircraft, such as the aircraft A exemplarily depicted in Fig. 4.

For purposes of illustration, the integrated seat modules 10 are merely shown as attached or integrated to the seats S, however, other types of implementation and other locations for arrangement may equally be possible for the setup of the seats S in Fig. 3. The seats S may for example be installed in the passenger cabin C of an aircraft with multiple seats. Each of the vehicle seats S may comprise armrests, headrests and/or backrests into which some or all of the seat function components 14 of the seat module 10 may be integrated. Of course, it may also be possible to arrange some or all of the seat function components 14 at different positions at or in the vicinity of the vehicle seat S.

The power supply for each of the seat modules 10 may be provided by a wired network of seat distribution boxes 9 which are connected to a central power supply of the aircraft, for example a power supply 6 of the aircraft server 1. The power supply network of the seat distribution boxes 9 may not only be used to distribute electrical power to the seat modules 10, but may also be employed for data communication, for example via an Ethernet communication line E. The Ethernet communication may be run concomitantly with the power distribution, for example by using Power-over-Ethernet (PoE).

The cabin environment C further comprises at least one controller with wireless communication functionality installed in the aircraft passenger cabin. For example, a window shade controller 7 may include a built-in or otherwise connected wireless communication node. The window shade controller 7 may wirelessly communicate with a window shade switch 14c of the seat module 10 and may enable a passenger to remotely operate the window shades of the aircraft by means of activation of the window shade switch 14c and wirelessly transmitting a corresponding activation signal to the window shade controller 7. As another example, an overhead bin component controller 8 may include a built-in or otherwise connected wireless communication node. The overhead bin component controller 8 may wirelessly communicate with a number of seat function components of the seat module 10, such as a reading light button 14b, and may enable a passenger to remotely operate functional elements arranged over the seat S in or near the overhead bin compartment, such as for example a reading light, by means of activation of the seat function components and wirelessly transmitting a corresponding activation signal to the overhead bin component controller 8 for activating the corresponding overhead functional elements.

The controllers 7, 8 with wireless communication functionality may be placed strategically in the cabin so that the distance between the seat modules 10 and the controllers 7, 8 may remain small in each case. The controllers 7, 8 are generally configured to wirelessly receive control signals transmitted by the wireless communication modules 12 of the seat modules 10.

It may further be possible to arrange a wireless access module 3 in communication with an aircraft server 1 in the cabin C. The wireless access module 3 may be a central wireless communication controller that aggregates the various signals from the wireless communication modules 12 of the various seat modules 10 and passes them on to the aircraft server 1, for example via an Ethernet connection. However, it may equally be possible for the wireless access module 3 to be built into or integrated into the aircraft server 1. Moreover, one or more additional wireless access components with repeater functionality (not explicitly shown in the figures) may be distributed strategically throughout the cabin C in order to keep the communication distance between the various seat modules S in the cabin and a corresponding one of the additional wireless access components with repeater functionality short. The additional wireless access components may then for example be wirelessly connected or hardwired to the central wireless communication controller of the aircraft server 1. Alternatively or additionally, the wireless communication modules may be configured to operate in repeater functionality as well.

The aircraft server 1 processes the control signals of the wireless communication modules 12 of each of the seat modules 10 according to the content of the control signals. Additionally, the aircraft server 1 may relay control signals to the wireless communication modules 12 of each of the seat modules 10 via the wireless access module 3, for example for centrally controlling certain seat function components 14 by the cabin crew and/or the cockpit crew. The software for network management may be operated on the aircraft server 1.

The wireless communication modules 12 of the seats S may be used to wirelessly transmit user commands to the aircraft server 1, for example PAX calls or activation of the overhead reading light. The wireless communication modules 10 may send an identification code uniquely identifying the respective seat S in periodic updates. The aircraft server 1 may have a mapping table for the identification codes of the wireless communication modules 12 that maps each module to a specific one of the vehicle seats S. That way, a control signal set off by a specific wireless communication module 12 may be associated with a corresponding seat S. The aircraft server 1 may then for example alert a flight attendant responsible for that very seat, if a PAX call has been wirelessly received. Alternatively, the aircraft server 1 may send an activation signal to an overhead reading light of the seat S for which a light activation control signal has been received wirelessly. Of course, the exemplarily explained control functions are not limited to the activation of a PAX call or a reading light, but may include any other passenger-initiated interaction with seat components or aircraft components in general as well.

It may further be possible to provide additional information via different content fields of the control signal packets sent by wireless communication module 12. For example, a passenger may select one of a plurality of list items presented to him via a display at his seat. The wireless communication module 12 may then send the respective selection encoded in the wirelessly transmitted control signal. The aircraft server 1 may have a corresponding mapping table in its repository to decode the control signal and initiate an associated action. For example, a passenger may select an on-board meal from a list of meals served on an aircraft flight. The aircraft server 1 will alert a flight attendant according to the selection of the passenger associated to a corresponding seat S of the wireless communication module 12 associated therewith.

Fig. 5 shows a schematic illustration of a flow diagram of a method M for operating a seat module. For example, the method M may be used with a seat module 10 such as the one illustrated in and explained in conjunction with Figs. 1 and 2. The method M may be particularly employed for integrated seat modules 10 in vehicle seats, such as the vehicle seats S in Fig. 3. The method M may specifically be suited for employment and performance in aircraft for seat modules installed or integrated in passenger seats of an aircraft, such as the aircraft A as illustrated in Fig. 4.

The method M comprises at M1 wirelessly transmitting at least one control signal to a wireless communication module 12 of the seat module 10 of the vehicle seat S. At M2, one of a plurality of seat function components 14 coupled to the wireless communication module 12 of the seat module 10 is actuated on the basis of the at least one wirelessly transmitted control signal. Finally, at M3, at least one data or control signal is wirelessly transmitted to a wireless access module 12 from the wireless communication module 12 of the seat module 10, the at least one data or control signal comprising information pertaining to at least one of the plurality of seat function components 14.

The wireless access module 3 and/or the wireless communication module 12 may in particular operate in accordance with the wireless avionics intra-communications (WAIC) standard in one or more frequency bands between 4.2 GHz and 4.4 GHz. Additionally or alternatively, the wireless access module 3 and/or the wireless communication module 12 may also operate according to IEEE 802.11 standards, i.e. in 900 MHz, 2.4 GHz, 3.6 GHz, 5 GHz, and/or 60 GHz frequency bands.

The embodiments of the invention are particularly useful for enhancing existing IFE systems in legacy long range aircraft. Passengers are conveniently able to activate the PAX call and reading light from their seat without having to operate control elements on the bottom surface of the overhead compartments. Moreover, it is not necessary to provide for a fixed cabling or wiring of the seats to the reading lights via a preinstalled IFE network.

The embodiments of the invention may in particular facilitate savings in the installation efforts of seats in the aircraft, particularly due to the fact that the need for extensive wiring and cabling is obviated. Furthermore, number of interfaces at the aircraft server is advantageously reduced due to the commonly used wireless access network. Additionally, the wireless connectivity for at least some of the seat function components in vehicle seats provides for high flexibility regarding the integration of additional future seat function components.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. In particular, the embodiments and configurations described for the seat modules and aircraft infrastructure can be applied accordingly to the aircraft or spacecraft according to the invention and the method according to the invention, and vice versa.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference signs

- 1: Aircraft server
- 2a: Ethernet interface
- 2b: Power supply interface
- 3: Wireless access module
- 4: In-flight entertainment server
- 5: Aircraft systems controller
- 6: Power supply
- 7: Window shade controller
- 14a: Seat controls
- 14b: Reading light button
- 14c: Window shade switch
- 14d: PAX call button
- 14e: Fasten seatbelt sign
- 14f: No smoking sign
- 14g: Seat BITE monitoring component
- 14h: Video display
- 8: Overhead bin component controller
- 9: Seat distribution box
- 10: Seat module
- 10a: Seat Ethernet interface
- 10b: Seat power supply interface
- 11: Entertainment system
- 12: Wireless communication module
- 13: Power distributor
- 14: Seat function components
- A: Aircraft
- AI: Aircraft infrastructure
- C: Passenger cabin
- E: Ethernet communication line
- M: Method
- M1: Method step
- M2: Method step
- M3: Method step
- P: Power supply line
- R: Redundant communication line
- S: Seat
- WC: Wireless communication

## Claims

1. Seat module (10) for a vehicle seat (S), comprising:
a wireless communication module (12) configured to wirelessly communicate data and control signals to and from a wireless access module (3);
a plurality of seat function components (14) coupled to the wireless communication module (12) and configured to exchange data and control signals with the wireless communication module (12);
an entertainment system (11); and
a seat data communication interface (10b) coupled to the entertainment system (11) and configured to stream received video and/or audio content transmitted to the entertainment system (11),
**characterized in that**
at least a first seat function component (14a) of the plurality of seat function components (14) is coupled to the entertainment system (11) and configured to redundantly send and receive data and control signals over both the wireless communication module (12) and the entertainment system (11).

2. Seat module (10) according to claim 1, wherein the plurality of seat function components (14) comprise one or more of seat controls (14a), a reading light button (14b), a window shade switch (14c), a PAX call button (14d), a fasten seatbelt sign (14e), a no smoking sign (14f), a seat BITE monitoring component (14g), a seat ambient light and a video display (14h).

3. Seat module (10) according to one of the claims 1 and 2, wherein the wireless communication module (12) is configured to operate according to the wireless avionics intra-communications, WAIC, standard in a frequency band between 4.2 GHz and 4.4 GHz.

4. Seat module (10) according to one of the claims 1 to 3, wherein the at least first seat function component (14a) is configured to send and receive data via the seat data communication interface (10b), if the wireless communication module (12) is in a faulty operational state, and configured to send and receive data via the wireless communication module (12), if the entertainment system (11) is in a faulty operational state.

5. Seat module (10) according to one of the claims 1 to 4, further comprising:
a power distributor (13); and
a seat power supply interface (10b) coupled to the power distributor (13).

6. Seat module (10) according to claim 5, wherein the wireless communication module (12) is electrically connected to the power distributor (13).

7. Vehicle seat (S), comprising a seat module (10) according to one of the claims 1 to 6 integrated into the vehicle seat (S).

8. Vehicle seat (S) according to claim 7, wherein the vehicle seat (S) is a passenger aircraft seat (S).

9. Aircraft (A), comprising at least one vehicle seat (S) according to claim 8.

10. Aircraft (A) according to claim 9, further comprising:
at least one wireless access module (3) installed in an aircraft passenger cabin (C) of the aircraft (A) and configured to wirelessly communicate with the wireless communication modules (12) of the seat modules (10) of the vehicle seats (S).

11. Aircraft (A) according to claim 10, further comprising
an aircraft server (1) coupled to or comprising the at least one wireless access module (3) and configured to process the data and control signal received from or to be transmitted to the wireless communication modules (12) of the seat modules (10) of the vehicle seats (S).

12. Aircraft (A) according to one of the claims 10 and 11, wherein the at least one wireless access module (3) may be operated according to the wireless avionics intra-communications, WAIC, standard in a frequency band between 4.2 GHz and 4.4 GHz.

13. Method (M) for operating a seat module (10) of a vehicle seat (S), the method (M) comprising:
wirelessly transmitting (M1) at least one control signal to a wireless communication module (12) of the seat module (10) of the vehicle seat (S);
actuating (M2) one of a plurality of seat function components (14) coupled to the wireless communication module (12) of the seat module (10) on the basis of the at least one wirelessly transmitted control signal; and
wirelessly transmitting (M3) at least one data or control signal to a wireless access module (12) from the wireless communication module (12) of the seat module (10), the at least one data or control signal comprising information pertaining to at least one of the plurality of seat function components (14), the method being **characterized by**
redundantly transmitting the at least one data and control signal over a seat data communication interface (10b) coupled to an entertainment system (11), the seat data communication interface (10b) being configured to stream received video and/or audio content transmitted to the entertainment system (11).

## Patentansprüche

1. Sitzmodul (10) für einen Fahrzeugsitz (S), umfassend:
ein drahtloses Kommunikationsmodul (12), das ausgestaltet ist, um Daten und Steuersignale an und von einem drahtlosen Zugriffsmodul (3) drahtlos zu übermitteln,
mehrere Sitzfunktionskomponenten (14), die mit dem drahtlosen Kommunikationsmodul (12) gekoppelt und ausgestaltet sind, um Daten und Steuersignale mit dem drahtlosen Kommunikationsmodul (12) auszutauschen,
ein Unterhaltungssystem (11) und
eine Sitzdatenkommunikationsschnittstelle (10b), die mit dem Unterhaltungssystem (11) gekoppelt und ausgestaltet ist, um empfangene Video- und/oder Audioinhalte, die an das Unterhaltungssystem (11) übertragen werden, zu streamen,
**dadurch gekennzeichnet, dass**
mindestens eine erste Sitzfunktionskomponente (14a) der mehreren Sitzfunktionskomponenten (14) mit dem Unterhaltungssystem (11) gekoppelt und ausgestaltet ist, um Daten und Steuersignale über sowohl das drahtlose Kommunikationsmodul (12) als auch das Unterhaltungssystem (11) redundant zu senden und zu empfangen.

2. Sitzmodul (10) nach Anspruch 1, wobei die mehreren Sitzfunktionskomponenten (14) eine oder mehrere Sitzsteuerungen (14a), einen Leselichtknopf (14b), einen Fensterblendenschalter (14c), einen Passagier-Rufknopf (14d), ein Anschnallzeichen (14e), ein Rauchverbotszeichen (14f), eine Sitz-BITE-Überwachungskomponente (14g), eine Sitzumgebungslicht- und Videoanzeige (14h) umfassen.

3. Sitzmodul (10) nach einem der Ansprüche 1 und 2, wobei das drahtlose Kommunikationsmodul (12) ausgestaltet ist, um gemäß dem Standard für drahtlose interne Avionikkommunikation, WAIC, in einem Frequenzband zwischen 4,2 GHz und 4,4 GHz betrieben zu werden.

4. Sitzmodul (10) nach einem der Ansprüche 1 bis 3, wobei die mindestens erste Sitzfunktionskomponente (14a) ausgestaltet ist, um Daten über die Sitzdatenkommunikationsschnittstelle (10b) zu senden und zu empfangen, wenn das drahtlose Kommunikationsmodul (12) in einem fehlerhaften Betriebszustand ist, und ausgestaltet ist, um Daten über das drahtlose Kommunikationsmodul (12) zu senden und zu empfangen, wenn das Unterhaltungssystem (11) in einem fehlerhaften Betriebszustand ist.

5. Sitzmodul (10) nach einem der Ansprüche 1 bis 4, ferner umfassend:
einen Leistungsverteiler (13) und
eine Sitzleistungsversorgungsschnittstelle (10b), die mit dem Leistungsverteiler (13) gekoppelt ist.

6. Sitzmodul (10) nach Anspruch 5, wobei das drahtlose Kommunikationsmodul (12) mit dem Leistungsverteiler (13) elektrisch verbunden ist.

7. Fahrzeugsitz (S), umfassend ein Sitzmodul (10) nach einem der Ansprüche 1 bis 6, das in den Fahrzeugsitz (S) integriert ist.

8. Fahrzeugsitz (S) nach Anspruch 7, wobei der Fahrzeugsitz (S) ein Passagierluftfahrzeugsitz (S) ist.

9. Luftfahrzeug (A), umfassend mindestens einen Fahrzeugsitz (S) nach Anspruch 8.

10. Luftfahrzeug (A) nach Anspruch 9, ferner umfassend:
mindestens ein drahtloses Zugriffsmodul (3), das in einer Luftfahrzeugpassagierkabine (C) des Luftfahrzeugs (A) installiert und ausgestaltet ist, um mit den drahtlosen Kommunikationsmodulen (12) der Sitzmodule (10) der Fahrzeugsitze (S) drahtlos zu kommunizieren.

11. Luftfahrzeug (A) nach Anspruch 10, ferner umfassend:
einen Luftfahrzeugserver (1), der mit dem mindestens einen drahtlosen Zugriffsmodul (3) gekoppelt ist oder dieses umfasst und ausgestaltet ist, um das Datenelement und Steuersignal, die von den drahtlosen Kommunikationsmodulen (12) der Sitzmodule (10) der Fahrzeugsitze (S) empfangen werden oder zu übertragen sind, zu verarbeiten.

12. Luftfahrzeug (A) nach einem der Ansprüche 10 und 11, wobei das mindestens eine drahtlose Zugriffsmodul (3) gemäß dem Standard für drahtlose interne Avionikkommunikation, WAIC, in einem Frequenzband zwischen 4,2 GHz und 4,4 GHz betrieben werden kann.

13. Verfahren (M) zum Betreiben eines Sitzmoduls (10) eines Fahrzeugsitzes (S), wobei das Verfahren (M) Folgendes umfasst:
drahtloses Übertragen (M1) mindestens eines Steuersignals an ein drahtloses Kommunikationsmodul (12) des Sitzmoduls (10) des Fahrzeugsitzes (S),
Betätigen (M2) einer von mehreren Sitzfunktionskomponenten (14), die mit dem drahtlosen Kommunikationsmodul (12) des Sitzmoduls (10) gekoppelt ist, auf der Basis des mindestens einen drahtlos übertragenen Steuersignals, und
drahtloses Übertragen (M3) mindestens eines Datenelements oder Steuersignals an ein drahtloses Zugriffsmodul (12) von dem drahtlosen Kommunikationsmodul (12) des Sitzmoduls (10), wobei das mindestens eine Datenelement oder Steuersignal Informationen umfasst, die mit mindestens einer der mehreren Sitzfunktionskomponenten (14) im Zusammenhang stehen,
wobei das Verfahren **gekennzeichnet ist durch** redundantes Übertragen des mindestens einen Datenelements und Steuersignals über eine Sitzdatenkommunikationsschnittstelle (10b), die mit einem Unterhaltungssystem (11) gekoppelt ist, wobei die Sitzdatenkommunikationsschnittstelle (10b) ausgestaltet ist, um empfangene Video- und/oder Audioinhalte, die an das Unterhaltungssystem (11) übertragen werden, zu streamen.

## Revendications

1. Module de siège (10) pour un siège de véhicule (S), comprenant :
un module de communication sans fil (12) configuré pour communiquer sans fil des données et signaux de commandes vers et depuis un module d'accès sans fil (3) ;
une pluralité de composants de fonctions de siège (14) couplés au module de communication sans fil (12) et configurés pour échanger des données et signaux de commande avec le module de communication sans fil (12) ;
un système de divertissement (11) ; et
une interface de communication de données de siège (10b) couplée au système de divertissement (11) et configurée pour diffuser en continu le contenu vidéo et/ou audio reçu et transmis vers le système de divertissement (11),
**caractérisé en ce**
**qu'**au moins un premier composant de fonction de siège (14a) de la pluralité de composants de fonctions de siège (14) est couplé au système de divertissement (11) et configuré pour envoyer et recevoir de manière redondante des données et signaux de commandes à la fois sur le module de communication sans fil (12) et le système de divertissement (11).

2. Module de siège (10) selon la revendication 1, dans lequel la pluralité de composants de fonctions de siège (14) comprennent un ou plusieurs composants parmi les commandes de siège (14a), un bouton d'éclairage de lecture (14b), un commutateur obturateur de hublot (14c), un bouton d'appel PAX (14d), un panneau de ceinture de sécurité attachée (14e), un panneau ne pas fumer (14f), un composant de surveillance BITE de siège (14g), une lumière d'ambiance de siège et un écran vidéo (14h).

3. Module de siège (10) selon une des revendications 1 et 2, dans lequel le module de communication sans fil (12) est configuré pour fonctionner en fonction des intra-communications avioniques sans fil (WAIC), norme dans une bande de fréquences entre 4,2 GHz et 4,4 GHz.

4. Module de siège (10) selon une des revendications 1 à 3, dans lequel l'au moins premier composant de fonction de siège (14a) est configuré pour envoyer et recevoir des données par le biais de l'interface de communication de données de siège (10b), lorsque le module de communication sans fil (12) est dans un état de fonctionnement défaillant, et configuré pour envoyer et recevoir des données par le biais du module de communication sans fil (12), lorsque le système de divertissement (11) est dans un état de fonctionnement défaillant.

5. Module de siège (10) selon une des revendications 1 à 4, comprenant en outre :
un distributeur électrique (13) ; et
une interface d'alimentation électrique de siège (10b) couplée au distributeur électrique (13).

6. Module de siège (10) selon la revendication 5, dans lequel le module de communication sans fil (12) est relié électriquement au distributeur électrique (13).

7. Siège de véhicule (S), comprenant un module de siège (10) selon une des revendications 1 à 6 intégré dans le siège de véhicule (S).

8. Siège de véhicule (S) selon la revendication 7, dans lequel le siège de véhicule (S) est un siège passager d'aéronef (S).

9. Aéronef (A), comprenant au moins un siège de véhicule (S) selon la revendication 8.

10. Aéronef (A) selon la revendication 9, comprenant en outre :
au moins un module d'accès sans fil (3) installé dans une cabine passagers d'aéronef (C) de l'aéronef (A) et configuré pour communiquer sans fil avec les modules de communication sans fil (12) des modules de sièges (10) des sièges de véhicule (S).

11. Aéronef (A) selon la revendication 10, comprenant en outre :
un serveur d'aéronef (1) couplé à ou comprenant l'au moins un module d'accès sans fil (3) et configuré pour traiter le signal de donnée et de commande reçu depuis ou à transmettre vers les modules de communication sans fil (12) des modules de sièges (10) des sièges de véhicule (S).

12. Aéronef (A) selon une des revendications 10 et 11, dans lequel l'au moins un module d'accès sans fil (3) peut fonctionner en fonction des intra-communications avioniques sans fil (WAIC), norme dans une bande de fréquences entre 4,2 GHz et 4,4 GHz.

13. Procédé (M) destiné à faire fonctionner un module de siège (10) d'un siège de véhicule (S), le procédé (M) consistant à :
transmettre sans fil (M1) au moins un signal de commande à un module de communication sans fil (12) du module de siège (10) du siège de véhicule (S) ; actionner (M2) un composant parmi une pluralité de composants de fonctions de siège (14) couplés au module de communication sans fil (12) du module de siège (10) sur la base de l'au moins un signal de commande transmis sans fil; et
transmettre sans fil (M3) au moins une donnée ou un signal de commande vers un module d'accès sans fil (12) depuis le module de communication sans fil (12) du module de siège (10), l'au moins une donnée ou un signal de commande comprenant des informations appartenant à au moins un composant parmi la pluralité de composants de fonctions de siège (14), le procédé étant **caractérisé par** la transmission redondante de l'au moins un signal de donnée et de commande sur une interface de communication de données de siège (10b) couplée à un système de divertissement (11), l'interface de communication de données de siège (10b) étant configurée pour diffuser en continu le contenu vidéo et/ou audio reçu transmis vers le système de divertissement (11).
